# EUROPEAN PATENT APPLICATION

(11) **EP 3 992 327 A1**
(43) Date of publication of application: **04.05.2022**
(21) Application number: 20204411.1
(22) Date of filing: 28.10.2020
(51) Int. Cl.: C23C 2/06, C23C 2/26, C23C 2/38, C23C 28/00, C23C 28/02, D07B 1/16

(54) **STEEL WIRE NETTING WITH DOUBLE COATING**

(71) Applicant: NV Bekaert SA, 8550 Zwevegem (BE)
(72) Inventor: ALLAERT, Bart, 9800 Deinze (BE); CATTOOR, Ko, 8020 Oostkamp (BE)
(74) Representative: Messely, Marc

(57) **Abstract**

A steel wire netting (100, 200) is adapted to be used in erosion control, in geotechnical solutions or in rockfall protection. The steel wire netting (100, 200) comprises steel wires (300). These steel wires (300) have a steel core (302). The steel core (302) is of a low-carbon or high-carbon nature. The steel wires (300) further have an intermediate metallic coating (306) of zinc or an zinc aluminium alloy or a zinc aluminium magnesium alloy on the steel core (302). The steel wires (300) further have a top coating of a polymer (310). This polymer (310) is selected out of a polyethylene terephthalate or a high density polyethylene.

## Description

### Technical Field

The invention relates to a steel wire netting adapted to be used in erosion control, geotechnical solutions or rockfall protection.

### Background Art

Steel wire nettings for erosion control, geotechnical solutions or rockfall protection are present in erosion mats, gabions, rockfall barriers, retaining walls, ...

These steel wire nettings must meet demands that become more and more severe. These steel nettings are subjected to extreme climate circumstances and are very often installed at remote locations in nature. So the steel wire nettings must exhibit a long lifetime, which means that they must have a more than average resistance against humidity, corrosion, abrasion and impact. In addition, any present coatings on the steel wires of these steel wire nettings must remain undamaged during production.

It is known to coat the steel wires with polyvinyl chloride, known as PVC, to provide the steel wires with some protection. A PVC coating, however, does not guarantee to meet the above-mentioned demands. One of the drawbacks of PVC is its humidity absorption. Another drawback is that the PVC may be damaged during production of the steel wire netting, e.g. during twisting or braiding. In addition, PVC shows embrittlement over time due to plasticizer leaching out. As these plasticizers are known to be hormone disruptive for living organisms, this causes environmental issues. Moreover, embrittlement will lead to lower adhesion, and lower resistance to impact of erosion and, over time, leading to spots of corrosion.

WO-A1-2004/003302 discloses a wire netting where the steel wires are directly covered with a coating of cross-linked polyethylene on the steel cores of the steel wires. Cross-linked polyethylene is known as XPLE. The cross-linked polyethylene, particularly in its low-density form, can be filled with carbon black and be supplemented with peroxides.

Despite the fact that XPLE has improved mechanical properties in comparison with PVC, it may still not be sufficient to meet the above-mentioned demands.

### Disclosure of Invention

It is a general object of the invention to mitigate the drawbacks of the prior art.

It is a particular object of the invention to provide steel wire nettings with an improved life time by increasing properties such as corrosion resistance, humidity resistance, abrasion resistance, and impact resistance.

According to a first aspect of the invention, there is provided a steel wire netting adapted to be used in erosion control, in geotechnical solutions or in rockfall protection. The steel wire netting comprises steel wires. These steel wires have a steel core.

The steel core is of a low-carbon or high-carbon nature (see below).

The steel wires further have an intermediate metallic coating of zinc or of a zinc aluminium alloy or of a zinc aluminium magnesium alloy on the steel core.

The steel wires further have a top coating of a polymer. This polymer being selected out of a polyethylene terephthalate or a high density polyethylene.

Polyethylene terephthalate and a high density polyethylene have proven to be advantageous with respect to abrasion and erosion resistance and durability in terms of guaranteed properties over time in hot climates and under water like in rivers or in sea.

These polymers may be applied on the steel wire preferably by means of extrusion or preferably by means of powder spray coating.

In a preferable embodiment of the invention, a primer of modified polyolefin is present between the intermediate metallic coating and the polymer top coating.

The presence of this primer greatly increases the adhesion between the polymer top coating and the intermediate metallic coating.

A first preferable embodiment for the intermediate metallic coating is a coating of zinc and unavoidable impurities. This zinc coating may be applied to the steel core by means of an electrolytic plating operation or by means of a hot dip process.

The hot dip process is the preferable way. The hot dip process has the advantage of creating a thin zinc iron alloy layer between the steel core and the zinc coating. This zinc iron alloy layer has the drawback of being very brittle but the great advantage of being very beneficial for the adhesion between the intermediate metallic coating and the steel core. As the uses of the steel wire netting, erosion control, geotechnical solutions or rockfall protection, are static uses, the brittle nature does not form a hurdle and does not weigh against the big advantages of the improved adhesion.

The intermediate metallic coating may also be a zinc aluminium alloy or a zinc aluminium magnesium alloy. An intermediate metallic coating of a zinc aluminium alloy has, as such, a better corrosion resistance than an intermediate metallic coating of 100% zinc. This zinc aluminium alloy coating may have an aluminium content ranging from 2 wt % to 12 wt %, e.g. ranging from 3 wt % to 12 wt %, i.e. 4 wt % to 11 wt %.

An example is a composition close to the eutectoid composition with between 4 wt % and 6 wt % aluminium, the rest being zinc and unavoidable impurities.

Another example is a zinc aluminium magnesium alloy coating which comprises 2 wt % to 8 wt % aluminium and 0.05 % to 3.0 wt % magnesium, the remainder being zinc and unavoidable impurities.

A preferable zinc aluminium alloy comprises 8 wt % to 12 wt % aluminium, the rest being zinc and unavoidable impurities. This preferable alloy has the advantage of a large presence of aluminium, amongst others at the surface. The aluminium at the surface may give rise to aluminium hydroxides that provide an excellent basis for bonds with either the primer or the top polymer coating. For example, acidic groups can be introduced in a polyolefinic primer via copolymerisation of a different monomer or via grafting onto a polyolefin-like polymer. The acidic groups can react with the aluminium hydroxides to form a strong bond.

In a preferable embodiment of the invention the polymer used for the top coating is an impact modified polyethylene terephthalate.

The impact modifier used in polyethylene terephthalate increases the crack resistance during use or during deformation. In other words, it provides ductility to the polyethylene terephthalate coating in the end application. This is done by influencing the crystallization process of the polyethylene terephthalate during cooling. Compared to a standard polyethylene terephthalate polymer, much smaller crystals are formed, providing less brittle material.

The impact modifier is of a reactive type, which means that it can chemically react with the base resin and is fixed chemically in the polymer preventing it from coming out of the polymer.

The reactive impact modifier is based on ethylene-ethyl acrylate-glycidyl methacrylate terpolymer.

The modifier has a structure as shown herebelow.

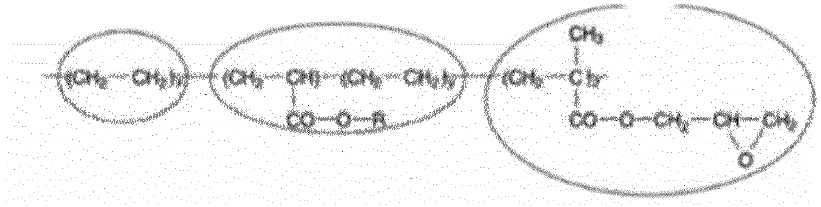

The impact modifier is added to the polyethylene therephthalate in amounts ranging between 1% and 4.5%.

Due to this modifier there is less degradation during the process of extruding the polymer on the metal coated steel wire, since it reacts directly with the COOH ends of the chains of polyethylene therephthalate. The binding of the modifier to the polyethylene terephthalate leads to enhanced mechanical properties and to the creation of new OH-functions. The thus modified polyethylene terephthalate has a higher viscosity leading to a higher and more stable centricity of the polymer coating around the metal coated steel wire. Finally, the thus modified polyethylene terephthalate is less moisture-sensitive both in processing and in coating properties.

Preferably a toughening agent in the form of a high molecular weight of polysiloxane modified polyethylene terephthalate is added to the polymer. The amount of toughening agent added ranges between 1% and 4% of the total weight of the polymer.

The addition of a toughening agent increases the resistance to abrasion and the resistance to erosion.

Preferably the polymer is a high-density polyethylene of the bimodal based type with at least one co-reactant selected out of the group of butane, hexane and octane. The coating with this type of polymer has a high environmental resistance.

Most preferably, an ionomer resin, a copolymer of ethylene and methacrylic acid is added to the polymer in amounts ranging from 10% to 25%. This addition has the advantage of improving the erosion resistance.

An alternative preferable embodiment of the polymer is a high-density polyethylene wherein 10% to 30% of a linear low density polyethylene has been mixed. This alternative also has an improved erosion resistance and increased strength.

The wire netting according to the invention can be any type of wire netting including welded structures, but is preferably a double-twist hexagonal netting or a chain-link fence.

According to a further aspect of the invention, there is provided a gabion made out of a wire netting as described above.

### Brief Description of Figures in the Drawings

FIGURE 1 is a schematic representation of part of a double-twist hexagonal wire netting.
FIGURE 2 is a schematic representation of part of a chainlink mesh.
FIGURE 3 is a cross-section of a double coated steel wire according to the invention.
FIGURE 4 shows preparation of a wire for an adhesion test.

### Mode(s) for Carrying Out the Invention

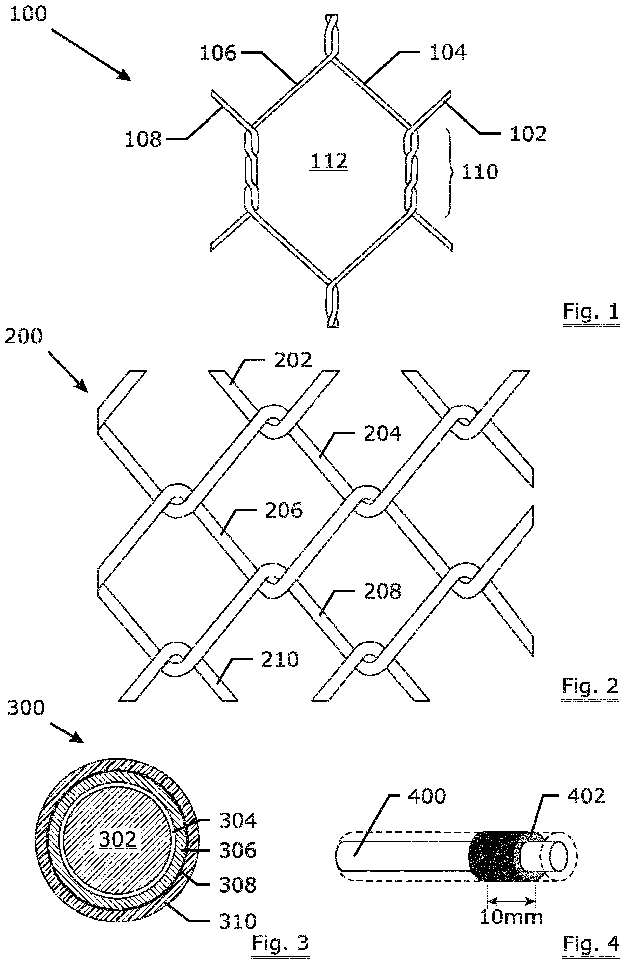

FIGURE 1 is a schematic representation of part of a double-twist hexagonal wire netting 100. The part that is shown on FIGURE 1 has four steel double-coated wires 102, 104, 106 and 108. Each of these steel wires 102, 104, 106 and 108 makes alternatingly a connection with a neighboring steel wire at the left side and a neighboring steel wire at the right side. Each connection is formed by intertwisting the two neighboring steel wires. The intertwisting 110 shows the twisting of steel wire 102 with steel wire 104. As this intertwisting is done in a same process over the whole width of the entire wire netting, hexagonal meshes 112 are formed.

FIGURE 2 is a schematic representation of part of a chainlink mesh 200. The part shown in FIGURE 2 has five undulated or zigzag wires 202, 204, 206, 208 and 210 which are alternatingly woven with a left neighboring steel wire and a right neighboring steel wire.

FIGURE 3 shows the cross-section of a double coated steel wire 300 used in the wire netting according to the invention. A steel core 302 has an intermediate metallic coating of zinc 306. A brittle zinc iron alloy forms the transition 304 between the steel and the zinc. In order to enhance the adhesion with the top coating of polymer, a primer 308 is present between the zinc layer and the top coating 310. The top coating 310 is a polyethylene terephthalate or a high-density polyethylene.

The steel wires used in the present invention can be of a low-carbon nature or of a high-carbon nature.

A low-carbon steel composition has a carbon content ranging between 0.04 wt % and 0.20 wt %. An example of a complete composition of such a low-carbon steel is as follows: a carbon content of 0.06 wt %, a silicon content of 0.166 wt %, a chromium content of 0.042 wt %, a copper content of 0.173 wt %, a manganese content of 0.382 wt %, a molybdenum content of 0.013 wt %, a nitrogen content of 0.006 wt %, a nickel content of 0.077 wt %, a phosphorus content of 0.007 wt %, a sulphur content of 0.013 wt %.

A high-carbon steel composition carbon is a steel composition having more than 0.60 wt% carbon, more particularly it is a steel composition along following lines (all percentages being percentages by weight):
a carbon content (% C) ranging from 0.60 wt% to 1.20 wt%, e.g. 0.80 wt% to 1.1 wt%;
a manganese content (% Mn) ranging from 0.10 wt% to 1.0 wt%, e.g. from 0.20 wt% to 0.80 wt%;
a silicon content (% Si) ranging from 0.10 wt% to 1.50 wt%, e.g. from 0.15 wt% to 0.70 wt%;
a sulphur content (% S) below 0.03 wt%, e.g. below 0.01 wt%;
a phosporus content (% P) below 0.03 wt%, e.g. below 0.01 wt%.

As a matter of example of making a wire netting according to the invention, starting from a wire rod with the suitable composition, the wire rod is drawn until its desired final steel wire diameter.

The thus drawn steel wire is then subjected to a hot dip galvanizing process to provide a zinc coating with a zinc-iron alloy transition layer to the core steel wire.

The zinc coated steel wire is then guided through a bath filled with a suitable primer to enhance the adhesion between the metallic intermediate coating and a top polymer coating. Alternatively the primer can be sprayed on the zinc coated steel wire.

Finally the top polymer coating may be applied to the zinc coated steel wire by means of an extrusion process.

### TEST

The adhesion of a prior art polymer coating and various invention polymer coatings on a steel wire was tested via the so-called Furukawa adhesion test. Referring to FIGURE 4, a steel wire 400 is covered with a polymer coating 402. The polymer coating 402 is removed from the steel wire except for a length of 10 mm. The steel wire 400 with the remaining coating 402 is then pulled through a calibrated opening to strip the remaining coating 402. The force needed for this stripping is recorded.

Following types of polymer coating have been tested:
1) PVC: prior art polyvinylchloride;
2) PET A: polyethylene terephthalate with reactive impact modifier based on ethylene-ethyl acrylate-glycidyl methacrylate terpolymer;
3) PET B: impact modified polyethylene terephthalate further having a toughening agent in the form of a high molecular weight of polysiloxane modified polyethylene terephthalate;
4) HDPE: high-density polyethylene;
5) HDPE A: high-density polyethylene of the bimodal based type with at least one co-reactant selected out of the group of butane, hexane and octane;
6) HDPE B: high-density polyethylene wherein a linear low density polyethylene has been mixed.

### TEST RESULTS

| Polymer coating | Thickness (µm) | Primer (Yes/No) | Stripping Force (N) |
|---|---|---|---|
| PVC - prior art | 500 | No | 17 |
| PET A - invention | 400 | No | 436 |
| PET B - invention | 500 | No | 375 |
| HDPE - invention | 500 | No | 40 |
| HDPE - invention | 500 | Yes | 261 |
| HDPE A - invention | 500 | Yes | 148 |
| HDPE B - invention | 500 | Yes | 212 |

The values of the stripping force are average values of five stripping tests.

## Claims

1. A steel wire netting adapted to be used in erosion control, in geotechnical solutions or in rockfall protection,
said steel wire netting comprising steel wires,
said steel wires having a steel core,
said steel core being of a low-carbon or high-carbon nature,
said steel wires further having an intermediate metallic coating of zinc or an zinc aluminium alloy or a zinc aluminium magnesium alloy on the steel core,
said steel wires further having a top coating of a polymer,
said polymer being selected out of a polyethylene terephthalate or a high density polyethylene.

2. The steel wire netting according to claim 1,
wherein a primer of modified polyolefin is present between the intermediate metallic coating and the polymer top coating.

3. The steel wire netting according to claim 1 or claim 2,
wherein said intermediate metallic coating is a coating of zinc and unavoidable impurities.

4. The steel wire netting according to claim 3,
wherein a zinc iron alloy layer is present between the steel core and the zinc coating.

5. The steel wire netting according to claim 1 or 2,
wherein said intermediate metallic coating is a coating of a zinc aluminium alloy with 4 wt % to 12 wt % aluminium, the rest being zinc and unavoidable impurities.

6. The steel wire netting according to claim 1 or 2,
wherein said intermediate metallic coating is a coating of a zinc aluminium alloy with 4 wt % to 12 wt % aluminium and with between 0.05% and 3% of magnesium, the rest being zinc and unavoidable impurities.

7. The wire netting according to any one of the preceding claims,
wherein a reactive impact modifier based on ethylene-ethyl acrylate-glycidyl methacrylate terpolymer has been added to the polyethylene terephthalate thereby creating an impact modified polyethylene terephthalate.

8. The wire netting according to claim 7,
wherein said polymer is an impact modified polyethylene terephthalate further comprising a toughening agent in the form of a high molecular weight of polysiloxane modified polyethylene terephthalate....

9. The wire netting according to any one of claims 1 to 6,
wherein said polymer is a high-density polyethylene of the bimodal based type with at least one co-reactant selected out of the group of butane, hexane and octane.

10. The wire netting according to claim 9,
wherein copolymer of ethylene and methacrylic acid has been added to the polymer.

11. The wire netting according to claim 9,
wherein said polymer is a high-density polyethylene wherein a linear low density polyethylene has been mixed..

12. The wire netting according to any one of the preceding claims,
wherein said wire netting is a double twist hexagonal netting.

13. The wire netting according to any one of claims 1 to 9,
wherein said wire netting is a chain link fence.

14. A gabion made out of a wire netting according to any one of claims 1 to 10.
